# EUROPÄISCHE PATENTANMELDUNG

(11) **EP 2 979 968 A1**
(43) Veröffentlichungstag der Anmeldung: **03.02.2016**
(21) Anmeldenummer: 15177696.0
(22) Anmeldetag: 21.07.2015
(51) Int. Cl.: B62M 6/50, B62M 6/45, B60T 8/32, B62L 3/00

(54) **VERFAHREN ZUM UNTERBRECHEN EINER STROMVERSORGUNG EINES EIN FAHRRAD UNTERSTÜTZEND ANTREIBENDEN ELEKTROMOTORS, DATENVERARBEITUNGSPROGRAMM ZUM DURCHFÜHREN EINES DERARTIGEN VERFAHRENS SOWIE FAHRRAD MIT EINEM DERARTIGEN DATENVERARBEITUNGSPROGRAMM**

(30) Priorität: 30.07.2014 DE 102014215014
(71) Anmelder: Daum Forschung und Entwicklung GmbH, 90768 Fürth (DE)
(72) Erfinder: Daum, Wilhelm, 90768 Fürth (DE)
(74) Vertreter: Rau, Schneck & Hübner Patentanwälte Rechtsanwälte PartGmbB

(57) **Zusammenfassung**

Ein Verfahren zum Unterbrechen einer Stromversorgung eines ein Fahrrad (1) unterstützend antreibenden Elektromotors (15) umfasst die Verfahrensschritte Bereitstellen eines Fahrrads (1) mit einem unterstützend antreibenden Elektromotor (15), Erkennen eines kritischen Bremsvorgangs des Fahrrads (1) mittels einer Sensoreinheit (23) und Unterbrechen der Stromversorgung des unterstützend antreibenden Elektromotors (15) mittels einer Steuerungseinheit (18), wobei zum Erkennen des kritischen Bremszustands eine Zustandsgröße des Fahrrads (1) überwacht wird.

## Beschreibung

Die vorliegende Patentanmeldung nimmt die Priorität der deutschen Patentanmeldung DE 10 2014 215 014.0 in Anspruch, deren Inhalt durch Bezugnahme hierin aufgenommen wird.

Die Erfindung betrifft ein Verfahren zum Unterbrechen einer Stromversorgung eines ein Fahrrad unterstützend antreibenden Elektromotors, ein Datenverarbeitungsprogramm zum Durchführen eines derartigen Verfahrens sowie Fahrrad mit einem derartigen Datenverarbeitungsprogramm.

Die DE 101 03 443 A1 offenbart einen elektrisch betriebenen Roller. Wenn der Fahrer während der Fahrt vom Roller springt, wird der den Roller antreibende Elektromotor automatisch abgeschalten.

Die DE 200 03 259 U1 offenbart eine Motorsteuerung für ein Elektrofahrrad. Mittels eines Relais wird ein Elektromotor bei jedem Bremsvorgang abgeschalten, um einen nicht-bestimmungsgemäßen Betrieb des Motors zu verhindern.

Die GB 2 319 755 A offenbart ein Fahrrad mit Elektromotor und Steuereinheit. Sobald die Fahrgeschwindigkeit einen unteren Schwellenwert unterschreitet, der nahe dem Stillstand ist, werden alle Funktionen deaktiviert.

Die EP 2 380 806 A1 offenbart eine Kraftübertragungseinheit für ein Pedelec, also ein mittels eines Elektromotors unterstützend angetriebenes Fahrrad. Die Kraftübertragungseinheit ist derart ausgeführt, dass dann, wenn von dem Fahrer keine Tretbewegung erfolgt, der unterstützend antreibende Elektromotor abgeschalten wird. Die Unterbrechung der Stromversorgung ist ausschließlich von der Tretbewegung des Fahrers abhängig. In einer Unfallsituation oder bei einem abrupten Abbremsen des Fahrrads mit der Handbremse, wobei trotzdem eine Pedalbetätigung des Fahrradfahrers gegeben ist, ist eine Stromversorgung für den Elektromotor gegeben, daraus resultiert ein nicht unerhebliches Gefährdungspotenzial und Verletzungsrisiko für den Fahrradfahrer.

Es ist die Aufgabe der vorliegenden Erfindung, ein Verfahren zum Unterbrechen einer Stromversorgung eines ein Fahrrad unterstützend antreibenden Elektromotors unter gefährdungstechnischen Gesichtspunkten zu verbessern.

Diese Aufgabe wird durch ein Verfahren mit den Merkmalen des Anspruchs 1, durch ein Datenverarbeitungsprogramm mit den Merkmalen des Anspruchs 9 sowie durch ein Fahrrad mit den Merkmalen des Anspruchs 10 gelöst.

Erfindungsgemäß wurde erkannt, dass eine Unterbrechung der Stromversorgung des unterstützend antreibenden Elektromotors mittels einer Steueningseinheit erfolgt, wenn ein kritischer Bremsvorgang des Fahrrads mittels einer Sensoreinheit erkannt worden ist. Ein kritischer Bremsvorgang ist beispielsweise ein abruptes Abbremsen, insbesondere eine Vollbremsung. Eine abrupte Abbremsung kann dann gegeben sein, wenn beispielsweise ein Hindernis unvermittelt auf der Fahrradstrecke auftaucht. Dabei handelt es sich um einen beabsichtigten Bremsvorgang. Ein kritischer Bremsvorgang kann auch durch ein unbeabsichtigtes Abbremsen verursacht sein. Ein unbeabsichtigtes Abbremsen liegt insbesondere im Falle eines Aufpralls des Fahrrads auf ein Hindernis, beispielsweise eine Wand oder ein Kraftfahrzeug, vor. Es muss gewährleistet sein, dass die Unterbrechung der Stromversorgung zuverlässig erfolgt. Insbesondere für den Fall, dass der Elektromotor und/oder die Kraftübertragungseinheit gemäß der EP 2 380 806 A1 derart ausgeführt sind, dass eine Stromversorgung erfolgt, obwohl eine Petalbetätigung nicht gegeben ist, ermöglicht das erfindungsgemäße Erfahren eine erhöhte Sicherheit für den Fahrradfahrer. Insbesondere ist ausgeschlossen, dass blockierte Pedale in Folge einer andauernden insbesondere unbeabsichtigten, Stromversorgung des Elektromotors nach einem kritischen Bremsvorgang weiter drehen und zu einem Verletzungsrisiko und einem unerwünschten Gefährdungspotenzial führen. Ein derartiges Verfahren steigert die Zuverlässigkeit und die Sicherheit von Fahrrädern mit unterstützend antreibendem Elektromotor. Zum Erkennen des kritischen Bremsvorgangs kann eine Zustandsgröße des Fahrrads überwacht werden. Eine Zustandsgröße des Fahrrads ist eine Größe, die insbesondere den Fahrzustand des Fahrrads beschreibt. Der Fahrzustand des Fahrrads kann durch die Fahrgeschwindigkeit und/oder einem Beschleunigungswert unmittelbar angegeben werden. Der Fahrzustand kann aber auch mittelbar durch Kenngrößen des Elektromotors, insbesondere einer Drehzahl im Fahrbetrieb, also einer Fahr-Drehzahl, angegeben werden.

Der Elektromotor ist insbesondere als Gleichstrommotor ausgeführt. Zusammen mit einem Getriebe, das insbesondere als Untersetzungsgetriebe ausgeführt ist, der Steuerungseinheit und der Sensoreinheit bildet der Elektromotor einen Antrieb für das Fahrrad.

Ein Verfahren, bei dem ein Übermitteln eines Unterbrechungssignals von der Sensoreinheit an die Steuerungseinheit zum automatischen Unterbrechen der Stromversorgung erfolgt, bietet eine erhöhte Sicherheit. Insbesondere erfolgt die Unterbrechung der Stromversorgung unmittelbar, nachdem der kritische Bremsvorgang erkannt worden ist.

Ein Verfahren, bei dem der kritische Bremsvorgang dadurch erkannt wird, dass in einem vorgebbaren Zeitintervall eine Drehzahl des Elektromotors von einer Fahr-Drehzahl des Elektromotors auf eine kritische Drehzahl reduziert wird, ermöglicht ein automatisiertes Unterbrechen der Stromversorgung. Die Abfrage, die der Unterbrechung der Stromversorgung zugrunde liegt, kann automatisiert, und insbesondere ohne menschliche Interaktion, unmittelbar ausgeführt werden. Ein derartiger Abfall der Drehzahl ist Indiz für den kritischen Bremsvorgang, der typischerweise durch das Betätigen der Handbremse und/oder durch einen Aufprall auf ein Hindernis ausgelöst worden sein kann. Die Größe des vorgebbaren Zeitintervalls beträgt typischerweise 50ms. Das Zeitintervall kann aber auch in Abhängigkeit der Sensibilität der Unterbrechung der Stromversorgung kleiner, insbesondere zwischen 10ms und 40ms, insbesondere zwischen 20ms und 30ms gewählt werden. Entsprechend sind auch größere Zeitintervalle von mindestens 60ms bis 200ms, insbesondere 80ms bis 150ms und insbesondere 100ms bis 120ms denkbar. Die Fahr-Drehzahl des Elektromotors hängt im Wesentlichen von der Ausfühningsform des Elektromotors ab. Die Fahr-Drehzahl und insbesondere die kritische Drehzahl des Elektromotors kann mittels eines Drehzahlsensors erfasst werden. Eine Fahr-Drehzahl kann typischerweise zwischen 2.000 min⁻¹ bis 4.000 min⁻¹ betragen. Es sind auch Elektromotoren bekannt, die eine Fahr-Drehzahl von etwa 1.000 min⁻¹ aufweisen. Die kritische Drehzahl ist kleiner als die Fahr-Drehzahl. Die kritische Drehzahl ist aber insbesondere größer als 0. Das bedeutet, dass der Elektromotor nach einem kritischen Bremsvorgang nicht vollständig still stehen muss. Insofern ist die Unterbrechung der Stromzufuhr für die Erhöhung der Sicherheit des Radfahrers vorteilhaft. Insbesondere ist die kritische Drehzahl kleiner als 20% der Fahr-Drehzahl, insbesondere kleiner als 15% der Fahr-Drehzahl und insbesondere kleiner als 10% der Fahr-Drehzahl. Bei einer derartigen Festlegung der kritischen Drehzahl ist insbesondere gewährleistet, dass die Unterbrechung der Stromversorgung bei einem typischen, bewussten, unkritischen Bremsvorgang die Stromversorgung für den Elektromotor erhalten bleibt.

Ein Verfahren, bei dem der kritische Bremsvorgang dadurch erkannt wird, dass eine kritische Negativ-Beschleunigung auftritt, ermöglicht eine unmittelbare Ermittlung eines kritischen Bremsvorgangs. Insbesondere ist die Ermittlung des Bremsvorgangs unabhängig von dem verwendeten Elektromotor. Die Beschleunigung des Fahrrads und somit die kritische Negativ-Beschleunigung des Fahrrads kann mittels eines Beschleunigungssensors erfasst werden.

In Abhängigkeit des Fahrrads und des Fahrverhaltens eines Fahrradfahrers kann die kritische Negativ-Beschleunigung, insbesondere der Betrag der kritischen Negativ-Beschleunigung, ab der ein Bremsvorgang als kritischer Bremsvorgang eingestuft wird und somit das Unterbrechen der Stromversorgung erfolgt, veränderlich festgelegt werden. Insbesondere ist der Betrag der kritischen Negativ-Beschleunigung größer als 50m/s² insbesondere größer als 80m/s², insbesondere größer als 120 m/s².

Ein Verfahren, bei dem das Unterbrechen der Stromversorgung ein Stoppen der Pedaldrehbewegung bewirkt, reduziert das Verletzungsrisiko für den Radfahrer.

Ein Verfahren, bei dem das Stoppen innerhalb eines Stopp-Zeitintervalls erfolgt, gewährleistet, dass innerhalb des Stopp-Zeitintervalls eine maximale Drehbewegung der Pedale erfolgt. Das Stopp-Zeitintervall kann in Abhängigkeit des Fahrverhaltens und in Abhängigkeit der geometrischen Verhältnisse des Fahrrads, insbesondere der Länge der Tretkurbeln für die Pedale, veränderlich eingestellt werden. Insbesondere gilt, dass das Stopp-Zeitintervall klein sein soll und insbesondere kleiner ist als 0,1 s, insbesondere kleiner als 0,05 s und insbesondere kleiner als 0,01 s.

Ein Datenverarbeitungsprogramm zum Durchführen des erfindungsgemäßen Verfahrens ermöglicht eine unkomplizierte Systemerweiterung. Ein derartiges Datenverarbeitungsprogramm kann insbesondere an einem bereits existierenden Fahrrad mit unterstützend antreibenden Elektromotor nachgerüstet werden. Ein bereits existierendes Fahrrad kann mit einer erweiterten Funktionalität ausgestattet werden, um das erfindungsgemäße Verfahren durchzuführen.

Ein Fahrrad mit einem Elektromotor zum unterstützenden Antreiben des Fahrrads, mit einer mit dem Elektromotor in Signalverbindung stehender Steuerungseinheit zum Unterbrechen der Stromversorgung des unterstützend antreibenden Elektromotors, mit einer mit der Steuerungseinheit in Signalverbindung stehenden Sensoreinheit zum Erkennen eines kritischen Bremsvorgangs des Fahrrads und mit einem Datenverarbeitungsprogramm zum Durchführen des Verfahrens bietet dessen Vorteile, worauf hiermit verwiesen wird. Insbesondere ist das Datenverarbeitungsprogramm in einem Datenspeicher der Steuerungseinheit abgespeichert. Das Datenverarbeitungsprogramm kann insbesondere in einem Arbeitsspeicher der Steuerungseinheit ausgeführt werden.

Ein Fahrrad mit mindestens einer Bremse, insbesondere einer Hinterradbremse und/oder einer Vorderradbremse, vereinfacht das Auslösen eines Bremsvorgangs, insbesondere eines kritischen Bremsvorgangs. Eine Hinterradbremse kann beispielsweise durch eine Rücktritt-Bremse oder eine Handbremse realisiert sein. Eine Vorderradbremse ist typischerweise durch eine Handbremse ausgeführt.

Ein Fahrrad, bei dem die Sensoreinheit einen Drehzahlsensor zum Ermitteln der Fahr-Drehzahl des Elektromotors aufweist, ermöglicht eine unmittelbare Erfassung des Fahrzustandes des Fahrrads.

Ein Fahrrad, bei dem die Sensoreinheit einem Beschleunigungssensor zum Ermitteln einer Negativ-Beschleunigung des Fahrrads aufweist, ermöglicht eine unmittelbare Erfassung eines Fahrzustands des Fahrrads.

Ein Fahrrad, bei dem die Sensoreinheit und der Elektromotor in einem gemeinsamen Gehäuse angeordnet sind, weist einen kompakten Aufbau und ein klares ästhetisches Erscheinungsbild auf. Zusätzliche Gehäuse an dem Fahrrad sind nicht erforderlich. Ein derartiges Fahrrad ist robust und kompakt ausgeführt.

Ein Fahrrad mit einem Antrieb bestehend aus einem Elektromotor, einer Sensoreinheit, einer Steuereinheit und einem mit dem Elektromotor gekoppelten Getriebe, ist unauffällig und kleinbauend ausgeführt.

Sowohl die in den Patentansprüchen angegeben Merkmalen als auch die in den nachfolgenden Ausführungsbeispielen des erfindungsgemäßen Fahrrads angegebenen Merkmale sind jeweils für sich alleine oder in Kombination miteinander geeignet, den erfindungsgemäßen Gegenstand weiter zu bilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf. Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine Seitenansicht eines Fahrrads mit einem unterstützend antreibenden Elektromotor,
- Fig. 2: ein Diagramm zur Darstellung der funktionalen Abhängigkeit der Drehzahl des Elektromotors von der Zeit bei einem kritischen Bremsvorgang,
- Fig. 3: eine Fig. 2 entsprechende Darstellung der funktionalen Abhängigkeit der Negativ-Beschleunigung.

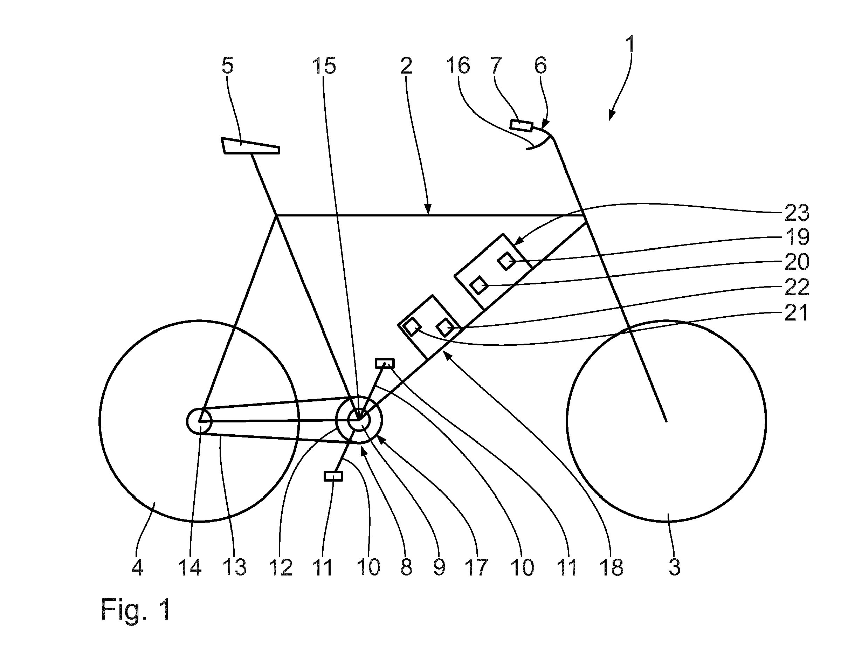

Ein in Fig. 1 als Ganzes mit 1 bezeichnetes Fahrrad hat einen Rahmen 2, an dem ein Vorderrad 3 und ein Hinterrad 4 befestigt sind. Am Rahmen 2 sind ein Sattel 5 und ein Lenker 6 mit Griffen 7 vorgesehen. Das Fahrrad 1 kann von einem nicht dargestellten Fahrer mittels einer mechanischen Antriebseinrichtung 8 durch Muskelkraft angetrieben werden. Die mechanische Antriebseinrichtung 8 umfasst eine zentral angeordnete Tretlagerwelle 9, von der aus sich radial nach außen zwei Tretkurbeln 10 erstrecken. An dem der Tretlagerwelle 9 gegenüberliegend angeordneten Ende der Tretkurbel 10 ist jeweils ein Pedal 11 vorgesehen. Die über die mechanische Antriebseinrichtung 8 von einer Person eingebrachten Antriebsbewegung wird von der Tretlagerwelle 9 über ein damit drehfest verbundenes Zahnrad 12 auf eine Kraftübertragungseinrichtung 13 in Form einer Kette übertragen. Mittels der Kraftübertragungseinrichtung 13 wird eine Antriebsbewegung von der mechanischen Antriebseinrichtung 8 auf eine Nabe 14 des Hinterrads 4 übertragen. Dazu kann an der Nabe 14 ein nicht näher dargestelltes Zahnrad drehfest mit der Nabe 14 verbunden sein. Zur Übertragung der Antriebsbewegung kann als Kraftübertragungseinrichtung auch ein Riemen, insbesondere ein Keilriemen, dienen. Entsprechend ist mit der Tretlagerwelle 9 und mit der Nabe 14 des Hinterrads 4 eine korrespondierende Riemenscheibe verbunden. Es sind auch andere Kraftübertragungseinrichtungen denkbar.

Das Fahrrad 1 weist weiterhin einen Elektromotor 15 auf, der gemäß dem gezeigten Ausführungsbeispiel in die Tretlagerwelle 9 integriert ist. Der Elektromotor 15 kann auch an einer anderen Stelle des Fahrrads 1 befestigt sein. Der Elektromotor 15 dient zum unterstützenden Antreiben des Fahrrads 1. Der Elektromotor 15 übt ein Drehmoment auf die Tretlagerwelle 9 aus. Das von dem Elektromotor ausgeübte Drehmoment ist der von der Person ausgeübten Antriebsdrehbewegung gleich gerichtet. Das gezeigte Fahrrad 1 wird auch als Elektrofahrrad oder Pedelec bezeichnet. Der Elektromotor 15 kann auch an dem Rahmen, insbesondere in einem speziell dafür vorgesehen Gehäuse, befestigt sein. Der Elektromotor 15 kann auch in einem der Rohre des Rahmens 2 integriert sein. Der Elektromotor 15 ist gemäß dem gezeigten Ausführungsbeispiel als Mittelmotor ausgeführt.

Es ist auch denkbar dass der Elektromotor 15 als Nabenmotor ausgeführt ist und in der Nabe 14 des Hinterrads 4 integriert ist. In diesem Fall, also wenn der Elektromotor 15 als Nabenmotor ausgeführt ist, wirkt der Elektromotor 15 derart, dass ein zusätzlicher Drehmoment durch einen Schaltvorgang auf die Kette ausgeübt wird, um die Kette zu entlasten. Bei einem Nabenmotor ist das Funktionsprinzip im Vergleich zu einem Mittelmotor verändert. Eine derartige Maßnahme, also das Abschalten der Stromzufuhr für einen Nabenmotor ist dann möglich, wenn in dem Nabenmotor eine Nabenschaltung integriert ist. Das Abschalten des Nabenmotors ist auch dann möglich, wenn keine Nabenschaltung integriert ist. Der Nabenmotor kann an dem Vorderrad und/oder an dem Hinterrad angebracht sein. Der Nabenmotor kann getriebelos eine Drehbewegung auf das Vorder- und/oder auf das Hinterrad übertragen. Der Nabenmotor kann mit einem integrierten und/oder kombinierten Getriebe als Nabenantrieb ausgeführt sein.

An dem Lenker 6 integriert, insbesondere im Bereich der Griffe 7 angeordnet, ist eine Handbremse 16. Die Handbremse 16 wirkt mit dem Vorderrad 3 zusammen. Die Handbremse 16 ist eine Vorderradbremse.

Das Fahrrad 1 weist eine Hinterradbremse 17 auf. Die Hinterradbremse 17 wirkt mit dem Hinterrad 4 zusammen. Durch Betätigen der Hinterradbremse 17 wird das Hinterrad 4 abgebremst. Insbesondere ist die Hinterradbremse als Rücktrittbremse ausgeführt an der Tretlagerwelle 9 vorgesehen. Ein Betätigen der Tretlagerwelle 9 entgegen der Antriebsdrehrichtung, also in einer Bremsdrehrichtung bewirkt eine Bremsdrehbewegung auf die Nabe 14 des Hinterrads 4. Die Hinterradbremse kann alternativ auch als Handbremse ausgeführt und am Lenker 6 angeordnet sein.

Das Fahrrad 1 weist ferner eine Steuerungseinheit 18 auf, die in Fig. 1 rein schematisch dargestellt ist. Die Steuerungseinheit 18 steht in Signalverbindung mit dem Elektromotor 15. Die Steuerungseinheit 18 dient zum Unterbrechen der Stromversorgung des Elektromotors 15. Gemäß dem gezeigten Ausführungsbeispiel ist die Steuerungseinheit 18 am Rahmen 2 in einem separaten Gehäuse angeordnet. Die Steuerungseinheit 18 kann vorteilhafterweise mit dem Elektromotor 15 in einem gemeinsamen Gehäuse ausgeführt sein.

Die Steuerungseinheit 18 weist einen Datenspeicher 21 auf. In dem Datenspeicher 21 ist ein Datenverarbeitungsprogramm abgespeichert. Das Datenverarbeitungsprogramm dient zum Durchführen eines Verfahrens zum Unterbrechen der Stromversorgung des das Fahrrad 1 unterstützend antreibenden Elektromotors 15. Das Fahrrad 1 weist ferner einen mit dem Datenspeicher 21 verbundenen Arbeitsspeicher 22 auf, in dem das Datenverarbeitungsprogramm ausgeführt werden kann. Der Arbeitsspeicher 22 ist in der Steuerungseinheit 18 angeordnet. Der Datenspeicher 21 und der Arbeitsspeicher 22 können integriert ausgeführt sein.

Das Datenverarbeitungsprogramm ermöglicht eine verbesserte und erweiterte Funktionalität des Fahrrads 1. Es ist möglich, das Datenverarbeitungsprogramm in ein bereits existierendes Fahrrad nachzurüsten, um die Funktionalität des Fahrrads insgesamt zu verbessern.

Das Fahrrad weist ferner eine Sensoreinheit 23 auf. Die Sensoreinheit 23 weist einen Drehzahlsensor 19 zum Ermitteln der Drehzahl n des Elektromotors 15 und einen Beschleunigungssensor 20 zum Ermitteln einer Negativbeschleunigung a des Fahrrads 1 auf. Es ist auch denkbar, dass nur einer der Sensoren, also der Drehzahlsensor 19 oder der Beschleunigungssensor 20 vorgesehen ist. Die Sensoreinheit 23 dient zum Erkennen eines kritischen Bremsvorgangs des Fahrrads 1. Die Sensoreinheit 23 ist mit der Steuerungseinheit 18 in Signalverbindung. Die Signalverbindung zwischen der Sensoreinheit 23 und der Steuerungseinheit 18 kann kabelgebunden oder kabellos ausgeführt sein. Die Signalverbindung zwischen Sensoreinheit 23 und Elektromotor 15 kann kabelgebunden oder kabellos ausgeführt sein.

Die Sensoreinheit 23 kann mit dem Elektromotor 15 in einem gemeinsamen Gehäuse angeordnet sein.

In die Steuerungseinheit 18 kann die Sensoreinheit 23 integriert sein. Die Einheiten 18, 23 können auch getrennt voneinander und insbesondere unabhängig voneinander ausgeführt sein. Der Elektromotor 15 bildet zusammen mit einer integrierten Steuerungseinheit 18 und einer integrierten Sensoreinheit 23 und gegebenenfalls mit einem nicht dargestellten Getriebe, einen Antrieb für das Fahrrad 1. Alternativ ist es denkbar, dass der Elektromotor 15 mit einer Abtriebswelle aus einem Gehäuse des Antriebs herausgeführt ist und die Sensoreinheit 23 extern, also außerhalb des Gehäuses angeordnet ist.

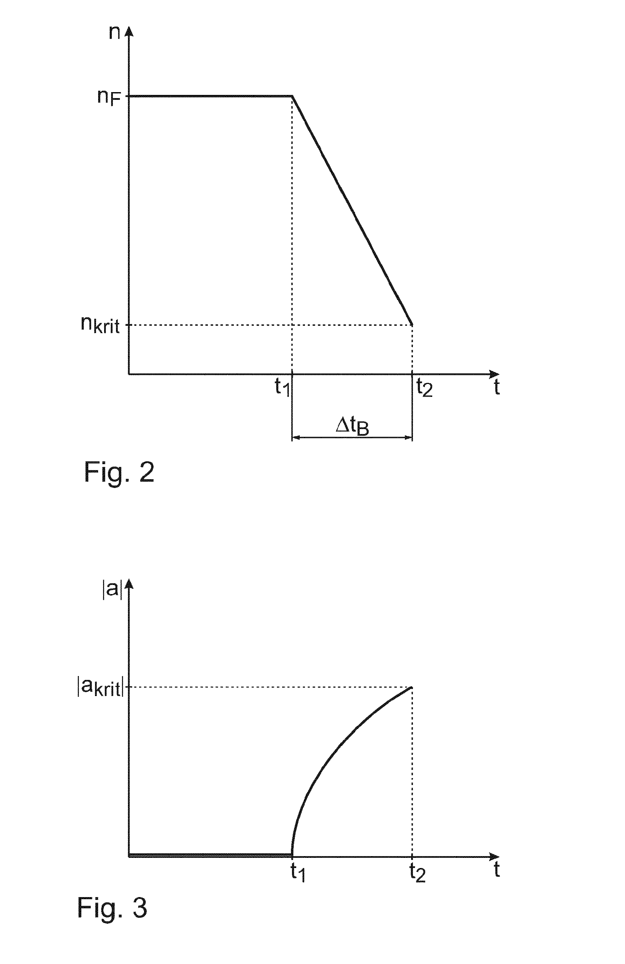

Nachfolgend wird ein Verfahren zum Unterbrechen einer Stromversorgung des das Fahrrad 1 unterstützend antreibenden Elektromotors 15 erläutert. Das Fahrrad 1 wird mit dem Elektromotor 15 bereitgestellt und von einem Fahrer gefahren. Mittels der Sensoreinheit 23 kann ein Fahrzustand des Fahrrads 1 ermittelt und überwacht werden. Dazu kann eine Zustandsgröße des Fahrrads dienen. Die Überwachung der Zustandsgröße dient dem Erkennen eines kritischen Bremsvorgangs. Sobald ein kritischer Bremsvorgang des Fahrrads 1 ausgelöst wird, wird dieser mittels der Sensoreinheit 23, insbesondere mittels des Drehzahlsensors 19 und/oder mittels eines Beschleunigungssensors 20 erfasst. Dies erfolgt dadurch, dass ausgehend von einer Fahr-Drehzahl n_{F} des Elektromotors 15 bei einem Bremsvorgang die Drehzahl reduziert wird. Diese Abhängigkeit der Drehzahl n von der Zeit t ist in Fig. 2 schematisch dargestellt. Die Fahr-Drehzahl n_{F} beträgt typischerweise 2.000 min⁻¹ bis 4.000 min⁻¹. Innerhalb dieses Fahr-Drehzahlbereichs kann die Fahr-Drehzahl n_{F} auch abweichen. Insbesondere ist ein plateaumäßiger Verlauf der Fahr-Drehzahl n_{F}, wie in Fig. 2 dargstellt, nicht zwingend erforderlich. Der Abfall der Drehzahl n von der Fahr-Drehzahl n_{F} auf die kritische Drehzahl nₖᵣᵢₜ, die insbesondere weniger als 20% der Fahr-Drehzahl n_{F} beträgt, erfolgt innerhalb eines vorgebaren Brems-Zeitintervalls Δt_{B}. Das Zeitintervall ist definiert durch die Differenz eines Zeitpunkts t₂, zu dem die kritische Drehzahl nₖᵣᵢₜ erreicht ist, und einem Zeitpunkt t₁, zu dem der Abfall der Fahr-Drehzahl n_{F} beginnt. Gemäß dem gezeigten Ausführungsbeispiel beträgt die kritische Drehzahl nₖᵣᵢₜ etwa 200 min⁻¹. Das Brems-Zeitintervall Δt_{B} beträgt 50ms.

Alternativ oder zusätzlich kann der kritische Bremsvorgang auch dadurch erkannt werden, dass mittels des Beschleunigungssensors 20 die kritische Negativ-Beschleunigung aₖᵣᵢₜ erfasst wird (Fig. 3). Die Negativ-Beschleunigung kennzeichnet mittelbar die Abbremsung des Fahrrads. Das bedeutet, dass die Abbremsung umso stärker ist je größer der Betrag der Negativ-Beschleunigung |aₖᵣᵢₜ| ist. Insbesondere gilt: |aₖᵣᵢₜ| > 50 m/s², insbesondere |aₖᵣᵢₜ| > 80 m/s², insbesondere |aₖᵣᵢₜ| > 120 m/s².

Die funktionale Abhängigkeit der Negativ-Beschleunigung a von der Zeit t ist in Fig. 3 dargestellt. Die Beschleunigung, insbesondere die Negativ-Beschleunigung, ist während eines Zeitraums, in dem keine oder allenfalls eine konstante Geschwindigkeitsänderung des Fahrrads erfolgt, gleich 0. Ab dem Zeitpunkt t₁, ab dem ein Bremsvorgang startet, also die Fahr-Drehzahl n_{F}, absinkt, resultiert eine Negativ-Beschleunigung. Fig. 3 zeigt den Betrag der Negativ-Beschleunigung in Abhängigkeit der Zeit. Theoretisch ist der Kurvenverlauf der Negativ-Beschleunigung unstetig. Insbesondere ist ein sprunghafter Verlauf für den Zeitpunkt t₁ möglich. In der Realität, kann ein derartiger Ansprung von einem ersten Beschleunigungs-Niveau für t < t₁ auf ein zweites Beschleunigungs-Niveau für t₁ < t < t₂ stetig sein. Wesentlich ist, dass mit Erreichen des Betrags der Negativ-Beschleunigung |aₖᵣᵢₜ| der kritische Bremsvorgang automatisch erfasst ist.

## Patentansprüche

1. Verfahren zum Unterbrechen einer Stromversorgung eines ein Fahrrad (1) unterstützend antreibenden Elektromotors (15) umfassend die Verfahrensschritte
- Bereitstellen eines Fahrrads (1) mit einem unterstützend antreibenden Elektromotor (15),
- Erkennen eines kritischen Bremsvorgangs des Fahrrads (1) mittels einer Sensoreinheit (23),
- Unterbrechen der Stromversorgung des unterstützend antreibenden Elektromotors (15) mittels einer Steuerungseinheit (18),
wobei zum Erkennen des kritischen Bremszustands eine Zustandsgröße des Fahrrads (1) überwacht wird,
wobei die Zustandsgröße einen Fahrzustand des Fahrrads (1) beschreibt.

2. Verfahren nach Anspruch 1, **gekennzeichnet durch** Übermitteln eines Unterbrechungssignals von der Sensoreinheit (23) an die Steuerungseinheit (18) zum automatischen Unterbrechen der Stromversorgung.

3. Verfahren nach einem der vorstehenden Ansprüche, **dadurch gekennzeichnet, dass** der kritische Bremsvorgang dadurch erkannt wird, dass in einem vorgebbaren Brems-Zeitintervall (Δt_{B}) die Drehzahl (n) des Elektromotors (15) von einer Fahr-Drehzahl (n_{F}) auf eine kritische Drehzahl (nₖᵣᵢₜ) reduziert wird, wobei insbesondere gilt: nₖᵣᵢₜ < 0,2 · n_{F}, insbesondere nₖᵣᵢₜ < 0,15 · n_{F}, insbesondere nₖᵣᵢₜ < 0,1 · n_{F}.

4. Verfahren nach einem der vorstehenden Ansprüche, **dadurch gekennzeichnet, dass** der kritische Bremsvorgang dadurch erkannt wird, dass eine kritische Negativ-Beschleunigung |aₖᵣᵢₜ| auftritt, wobei insbesondere gilt: |aₖᵣᵢₜ| > 50 m/s², insbesondere |aₖᵣᵢₜ| > 80 m/s², insbesondere |aₖᵣᵢₜ| > 120 m/s².

5. Verfahren nach einem der vorstehenden Ansprüche, **dadurch gekennzeichnet, dass** das Unterbrechen der Stromversorgung ein Stoppen der Pedaldrehbewegung bewirkt.

6. Verfahren nach Anspruch 5, **dadurch gekennzeichnet, dass** das Stoppen der Pedaldrehbewegung innerhalb eines Stopp-Zeitintervalls erfolgt, das insbesondere kleiner ist als 0,1 s, insbesondere kleiner als 0,05 s und insbesondere kleiner als 0,01 s.

7. Verfahren nach einem der vorstehenden Ansprüche, **dadurch gekennzeichnet, dass** der Fahrzustand des Fahrrads (1) durch die Fahrgeschwindigkeit und/oder durch einen Beschleunigungswert unmittelbar angegeben ist.

8. Verfahren nach einem der vorstehenden Ansprüche, **dadurch gekennzeichnet, dass** der Fahrzustand des Fahrrads (1) mittelbar durch Kenngrößen des Elektromotors (15), insbesondere durch eine Drehzahl im Fahrbetrieb, angegeben ist.

9. Datenverarbeitungsprogramm zum Durchführen des Verfahrens nach einem der vorstehenden Ansprüche.

10. Fahrrad umfassend
a. einen Elektromotor (15) zum unterstützenden Antreiben des Fahrrads (1),
b. eine mit dem Elektromotor (15) in Signalverbindung stehende Steuerungseinheit (18) zum Unterbrechen der Stromversorgung des unterstützend antreibenden Elektromotors (15),
c. eine mit der Steuerungseinheit (18) in Signalverbindung stehende Sensoreinheit (23) zum Erkennen eines kritischen Bremsvorgangs des Fahrrads (1) und
d. ein Datenverarbeitungsprogramm nach Anspruch 9.

11. Fahrrad nach Anspruch 10, **gekennzeichnet durch** mindestens eine Bremse, insbesondere eine Hinterradbremse (17) und/oder eine Vorderradbremse (16) zum Auslösen eines Bremsvorgangs.

12. Fahrrad nach Anspruch 10 oder 11, **dadurch gekennzeichnet, dass** die Sensoreinheit (23) einen Drehzahlsensor (19) zum Ermitteln der Drehzahl (n) des Elektromotors (15) aufweist.

13. Fahrrad nach einem der Ansprüche 10 bis 12, **dadurch gekennzeichnet, dass** die Sensoreinheit (23) einen Beschleunigungssensor (20) zum Ermitteln einer Negativ-Beschleunigung (a) des Fahrrads (1) aufweist.

14. Fahrrad nach einem der Ansprüche 10 bis 13, **dadurch gekennzeichnet, dass** die Sensoreinheit (23) und der Elektromotor (15) in einem gemeinsamen Gehäuse angeordnet sind.

15. Fahrrad nach einem der vorstehenden Ansprüche **gekennzeichnet durch** einen Antrieb, der den Elektromotor (15), eine, insbesondere in den Elektromotor (15) integrierte, Sensoreinheit (23), eine, insbesondere in den Elektromotor (15) integrierte, Steuerungseinheit (18) und insbesondere ein mit dem Elektromotor (15) gekoppeltes Getriebe aufweist.
